# EUROPEAN PATENT APPLICATION

(11) **EP 4 056 654 A1**
(43) Date of publication of application: **14.09.2022**
(21) Application number: 21305276.4
(22) Date of filing: 08.03.2021
(51) Int. Cl.: C09C 1/02, C01F 11/18

(54) **SURFACE MODIFIED CALCIUM CARBONATE AND USE THEREOF IN POLYMER SYSTEMS**

(71) Applicant: ImerTech SAS, 75015 Paris (FR)
(72) Inventor: GRIGORIEFF, Shamila, 13310 Saint-Martin-de-Crau (FR); ESPOSITO, Anaelle, 13280 Arles (FR); RODARY, Gaelle, 13270 Fos sur mer (FR); BASSALER, Alice, 72250 Freudenstadt (DE)
(74) Representative: Haseltine Lake Kempner LLP

(57) **Abstract**

The present disclosure relates to a silane treated composition, and a filled polymer composition comprising such silane treated composition and a polymer for improved mechanical properties; the treatment being in two steps, the first being a treatment with an aqueous silicate, followed by a second treatment with a silane-containing compound; optionally including treatment with a aliphatic carboxylic acid prior to the first treatment.

## Description

### FIELD OF THE INVENTION

The present invention relates to calcium carbonate having a modified surface, particularly but not exclusively to calcium carbonate having a modified surface for use in polymer compositions. Embodiments of the present disclosure relate to materials technology in general and more specifically to the preparation and use of silane-treated calcium carbonate particles as a reinforcing agent in polymer systems.

### BACKGROUND OF THE INVENTION

Calcium carbonate (CaCO₃) is one of the most common and widely used minerals finding applications in various materials including rubbers, plastics, paint, paper, inks, food products and pharmaceuticals. Calcium carbonate particles are produced in many forms, such as precipitated calcium carbonate (PCC) and ground calcium carbonate (GCC). Modified versions of calcium carbonate are especially useful because the characteristics of this relatively inexpensive mineral can be altered to replicate and replace other more expensive, rare or environmentally unfriendly materials. In this context, much interest has been generated in the production and use of core-shell particles based on calcium carbonate as the core material, in which the shell of these core-shell particles is a functional surface coating.

The method of producing precipitated calcium carbonate (PCC) by use of calcined natural calcium carbonate is well-known and widely used in the industry. Calcining generates calcium oxide from which a precipitated calcium carbonate is produced upon consecutive exposure to water and carbon dioxide.

Calcium carbonate can be precipitated from aqueous solution in one or more different compositional forms: vaterite, calcite, aragonite, amorphous, or a combination thereof. Generally, vaterite, calcite, and aragonite are crystalline compositions and may have different morphologies or internal crystal structures, such as, for example, rhombic, orthorhombic, hexagonal, scalenohedral, or variations thereof.

Silane-treated calcium carbonate particles find various possible applications. For example, the hydroxyl groups that are present on the surface of silane-treated particles can be used to create inter-bonds that strengthen materials such as papers, sealants, polymers and rubbers. Silane-based surface modification agents can radically alter the properties of the resulting surface-modified particles. However, the uses of known silane-treated calcium carbonate particles are often limited by the properties of the calcium carbonate precursor.

The hydrophilic character of untreated calcium carbonate is an issue for its incorporation into a matrix (such as a polymer matrix) in some applications. When calcium carbonate is treated with the usual coating agent(s) (such as aliphatic carboxylic acids) it can affect certain properties, such as increasing elasticity but with an undesirable decrease in tensile strength of the resulting polymer matrix. In addition, the lack of hydroxyl groups at the surface of calcium carbonate causes more difficulty in applying a coating of silane.

Other problems with known silica treated calcium carbonate particles relate to elevated moisture content due at least in part to the presence of hydrophilic hydroxyl groups. Thus, there is an ongoing need to develop new and improved filled compositions for use in polymer applications and the like.

### SUMMARY OF THE DISCLOSURE

In accordance with a first aspect, there is provided a composition comprising:
a calcium carbonate core at least partially treated with a compound comprising a first component containing a sub-component of the formula (Si-O)ₙ, wherein n is at least 1;
and up to 100 or up to 10 or up to 7 or up to 5; and a second component of a formula selected from:

   [(OR1)₃Si-(R2)]ₘ-X

   or

   [(OR1)₂(OH)Si-(R2)]ₘ-X

   or

   [(OR1)(OH)₂Si-(R2)]ₘ-X

   or

   [(OH)₃Si-(R2)]ₘ-X

   or

   [(Si-O)(OH)₂Si-(R2)]ₘ-X

   or

   [(Si-O)(OH)Si-(R2)]ₘ-X

   or

   [(Si-O)Si-(R2)]ₘ-X

   wherein R1, R2 are alkyl groups, and X is a functional group selected from the group consisting of: amino, vinyl, alkyl, aminoalkyl, phenyl, and fluoroalkyl, and m can be 1 or 2. As used throughout the description, the alkyl groups of R1 can generally contain 1 or 2 carbon atoms per molecule; and the alkyl groups of R2 can generally contain 3 carbon atoms per molecule.

In accordance with a second aspect, a method is provided for making a treated composition, such as that described above, the method comprising:
providing a calcium carbonate core;
applying a first layer comprising a first component comprising silicon and at least one hydroxyl group to the surface of the calcium carbonate core thereby forming a first treated core, by contact of the CaCO₃ with an aqueous silicate; and
contacting the first treated core with a compound selected from the group consisting of aminosilane, vinylsilane, alkylsilane, aminoalkylsilane, phenylsilane, fluoroalkylsilane, and combinations thereof to thereby apply a second layer on the surface of the first layer, wherein the second layer comprises a second component of a formula selected from:

   [(OR1)₃Si-(R2)]ₘ-X or

   [(OR1)₂(OH)Si-(R2)]ₘ-X or

   [(OR1)(OH)₂Si-(R2)]ₘ-X or

   [(OH)₃Si-(R2)]ₘ-X or

   [(Si-O)(OH)₂Si-(R2)]ₘ-X or

   [(Si-O)(OH)Si-(R2)]ₘ-X or

   [(Si-O)Si-(R2)]ₘ-X

   wherein R1, R2 are alkyl groups, and X is a functional group selected from the group consisting of: amino, vinyl, alkyl, aminoalkyl, phenyl, and fluoroalkyl, and m can be 1 or 2. As used throughout the description, the alkyl groups of R1 can generally contain 1 or 2 carbon atoms per molecule; and the alkyl groups of R2 can generally contain 3 carbon atoms per molecule.

In accordance with a third aspect, articles are provided which can comprise:
a polymer; and
a filler comprising a composition in accordance with the above aspects.

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

Particular aspects of the present disclosure are described in greater detail below. The terms and definitions provided herein control, if in conflict with terms and/or definitions incorporated by reference.

In the Summary above and in the Detailed Description, and the claims below, reference is made to particular features (including process steps) of the disclosure. It is understood that the present disclosure includes all possible combinations of such particular features. For example; where a particular feature is disclosed in the context of a particular aspect or embodiment, or a particular claim, that feature can also be used, to the extent possible in combination with and additionally or alternatively in the context of other particular aspects or embodiments of the disclosure and, in the disclosure generally.

As used herein, the terms "comprises," "comprising," or any other variation thereof are intended to cover a non-exclusive inclusion, such that a process, method, composition, article, or apparatus that comprises a list of elements does not include only those elements, but may include other elements not expressly listed or inherent to such process, method, composition, article, or apparatus. The term "exemplary" is used in the sense of "example" rather than "ideal."

As used herein, the singular forms "a," "an," and "the" include plural reference unless the context dictates otherwise. The terms "approximately" and "about" refer to being nearly the same as a referenced number or value. As used herein, the terms "approximately" and "about" should be understood to encompass ± 5% of a specified amount or value.

When a range is used herein as "ranging from (a first number) to (a second number)," "between (a first number) and (a second number)," or "(a first number)-(a second number)," this refers to a range whose lower limit is the first number, and whose upper limit is the second number. As used herein, the term "at least" followed by a number denotes the start of a range beginning with that number, which may be a range having an upper limit or no upper limit depending on the variable term being defined. For example, "at least 1" includes 1 and more than 1.

It has surprisingly been found that improvements in the tensile strength of a polymer composition are achievable by incorporation of a novel silane-treated calcium carbonate filler in accordance with the description herein.

The composition disclosed in this application can comprise, consist of, or consists essentially of a calcium carbonate core at least partially treated with a compound. The compound can comprise, consist of or consist essentially of a first component containing a sub-component of the formula (Si-O)ₙ, wherein n is at least 1; and up to 100 or up to 10 or up to 7 or up to 5; and a second component of a formula selected from:

[(OR1)₃Si-(R2)]ₘ-X

or

[(OR1)₂(OH)Si-(R2)]ₘ-X

or

[(OR1)(OH)₂Si-(R2)]ₘ-X

or

[(OH)₃Si-(R2)]ₘ-X

or

[(Si-O)(OH)₂Si-(R2)]ₘ-X

or

[(Si-O)(OH)Si-(R2)]ₘ-X

or

[(Si-O)Si-(R2)]ₘ-X

wherein R1, R2 are alkyl groups, and X is a functional group selected from the group consisting of: amino, vinyl, alkyl, aminoalkyl, phenyl, and fluoroalkyl, and m can be 1 or 2. As used throughout the description, the alkyl groups of R1 can generally contain 1 or 2 carbon atoms per molecule; and the alkyl groups of R2 can generally contain 3 carbon atoms per molecule.

In accordance with an aspect, at least one of the members of the sub-component of the first component is associated with or ionically or covalently bonded to at least one member of the calcium carbonate core; and at least one of the members of the second component is associated with or ionically or covalently bonded to at least one of the members of the sub-component of the first component.

In accordance with an aspect, the calcium carbonate core comprises, consists of, or consists essentially of a precipitated calcium carbonate, a ground calcium carbonate, or combinations thereof. The calcium carbonate core, whether precipitated calcium carbonate or ground calcium carbonate, can have a BET specific surface area in the range of 2 to 100m²/g, or 5 to 50 m²/g, or 10 to 30 m²/g.

In accordance with an aspect, a precursor of the first component can be selected from the group consisting of: hydroxyl functionalized polysilicates, polysilicic acid, sodium silicate, potassium silicate, an alkyl silicate, silica and combinations thereof; and the second component can be selected from the group consisting of: an aminosilane, vinylsilane, alkylsilane, aminoalkylsilane, phenylsilane, fluoroalkylsilane, and combinations thereof.

In accordance with an aspect, a precursor of the first component is an alkyl silicate and the second component is an aminosilane.

In accordance with an aspect, the composition described herein can further comprise an aliphatic carboxylic acid, or salts thereof, positioned between the calcium carbonate core and the first component. The form of such aliphatic carboxylic acid or salt is typically in the form of a salt, though some aliphatic carboxylic acid may remain. The aliphatic carboxylic acid can have at least 10 chain carbon atoms or from 10 to 20 carbon atom chains. The aliphatic carboxylic acid used in preparing the composition can be selected from stearic acid, palmitic acid, behenic acid, montanic acid, capric acid, lauric acid, myristic acid, isostearic acid, linoleic acid, oleic acid and cerotic acid. In accordance with an aspect, the aliphatic carboxylic acid of the aliphatic carboxylic acid layer comprises stearic acid.

In accordance with an aspect, at least one of the members of the aliphatic carboxylic acid layer is associated with at least one of the members of the calcium carbonate core; and at least one of the members of the sub-component of the first component is associated with or ionically or covalently bonded to one or more of i) at least one member of the aliphatic carboxylic acid layer, and ii) at least one of the members of the calcium carbonate core; and at least one of the members of the second component is associated with at least one of the members of the sub-component of the first component.

In accordance with an aspect, a method of making a treated composition can comprise, consist of, or consist essentially of:
i) providing a calcium carbonate core;
ii) applying a first layer comprising a first component comprising silicon and at least one hydroxyl group to the surface of the calcium carbonate core thereby forming a first treated core, by contact of the CaCO₃ with a first material comprising an aqueous silicate; and
iii) contacting the first treated core with a second material comprising a compound selected from the group consisting of aminosilane, vinylsilane, alkylsilane, aminoalkylsilane, phenylsilane, fluoroalkylsilane, and combinations thereof to thereby apply a second layer on the surface of the first layer, wherein the second layer comprises a second component of a formula selected from:

   [(OR1)₃Si-(R2)]ₘ-X

   or

   [(OR1)₂(OH)Si-(R2)]ₘ-X

   or

   [(OR1)(OH)₂Si-(R2)]ₘ-X

   or

   [(OH)₃Si-(R2)]ₘ-X

   or

   [(Si-O)(OH)₂Si-(R2)]ₘ-X

   or

   [(Si-O)(OH)Si-(R2)]ₘ-X

   or

   [(Si-O)Si-(R2)]ₘ-X

   wherein R1, R2 are alkyl groups, and X is a functional group selected from the group consisting of: amino, vinyl, alkyl, aminoalkyl, phenyl, and fluoroalkyl, and m can be 1 or 2.

In accordance with an aspect, the calcium carbonate core comprises, consists of, or consists essentially of a precipitated calcium carbonate, a ground calcium carbonate, or combinations thereof. The calcium carbonate core, whether precipitated calcium carbonate or ground calcium carbonate, can have a BET specific surface area in the range of 2 to 100m²/g, or 5 to 50 m²/g, or 10 to 30 m²/g.

In accordance with an aspect, a precursor of the first component is selected from the group consisting of: hydroxyl functionalized polysilicates, polysilicic acid, sodium silicate, potassium silicate, an alkyl silicate, silica and combinations thereof.

In accordance with an aspect, the method(s) described herein further comprises, consists of, or consists essentially of:
applying an aliphatic carboxylic acid layer, as described herein, to the calcium carbonate core prior to application of the first layer. At least one of the members of the aliphatic carboxylic acid layer is associated with at least one of the members of the calcium carbonate core; and at least one of the members of the sub-component of the first component is associated with or ionically or covalently bonded to one or more of i) at least one member of the aliphatic carboxylic acid layer, and ii) at least one of the members of the calcium carbonate core; and at least one of the members of the second component is associated with or ionically or covalently bonded to at least one of the members of the sub-component of the first component.

In accordance with an aspect, the treated composition described herein can be used as a component in polymer compositions including polymer articles, rubbers, sealants, adhesives and paints. For such applications, a polymer composition can comprise, consist of, or consist essentially of a polymer; and a filler comprising a treated composition as described herein. The polymer can be selected from the group consisting of silane-terminated polyethers, silane-terminated polyurethane, silane modified polymers, and combinations thereof.

Further, in certain aspects, improvements in a mechanical property of a filled polymer composition including the treated calcium carbonate described herein include any one of the following: increased tensile strength, increased flexural modulus, decreased elongation at break. The higher the flexural modulus, the stiffer the material. The lower the flexural modulus, the more flexible it is. The stiffness of the filled polymer composition or article formed therefrom may be determined by any suitable method.

### Test Methods

Modulus - The stiffness of a filled polymer composition or article formed therefrom is determined by measuring its modulus at 100% elongation in accordance with ISO 37.

Strength at Break - The force required to pull a specimen to the point of material failure is determined by measuring the strength at break in accordance with ISO 37.

Elongation at Break - The maximal elongation that a material can withstand before breaking is determined by measuring the elongation at break in accordance with ISO 37.

Specific Surface Area - As used herein, "specific surface area" means the area of the surface of the inorganic additive with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277).

In accordance with any of the embodiments of the present disclosure described herein, the treated calcium carbonate can be present in the filled polymer composition in an amount of from about 10 to about 70 wt% or from about 30 to about 55 wt%, based on the total weight of the filled polymer composition.

In accordance with any of the aspects of the present disclosure described herein, the polymer is present in the filled polymer composition in an amount of at least about 20 wt% or at least about 25 wt% or at least about 30 wt%, or from about 20 to about 40 wt% or about 20 wt% to about 50 wt% or about 20 wt% to about 60 wt%, based on the total weight of the filled polymer composition. The polymer(s) can be virgin, recycled, or mixtures thereof.

For the avoidance of doubt, the present application is directed to subject-matter described in the following numbered paragraphs:
1. A composition comprising:
   a calcium carbonate core at least partially treated with a compound comprising a first component containing a sub-component of the formula (Si-O)ₙ, wherein n is at least 1;
   and up to 100 or up to 10 or up to 7 or up to 5; and a second component of a formula selected from:

      [(OR1)₃Si-(R2)]ₘ-X

      or

      [(OR1)₂(OH)Si-(R2)]ₘ-X

      or

      [(OR1)(OH)₂Si-(R2)]ₘ-X

      or

      [(OH)₃Si-(R2)]ₘ-X

      or

      [(Si-O)(OH)₂Si-(R2)]ₘ-X

      or

      [(Si-O)(OH)Si-(R2)]ₘ-X

      or

      [(Si-O)Si-(R2)]ₘ-X

      wherein R1, R2 are alkyl groups, and X is a functional group selected from the group consisting of: amino, vinyl, alkyl, aminoalkyl, phenyl, and fluoroalkyl, and m can be 1 or 2; optionally, wherein the alkyl groups of R1 contains 1 or 2 carbon atoms per molecule; and the alkyl groups of R2 contain 3 carbon atoms per molecule.
2. The composition according to numbered paragraph 1, wherein at least one of the members of the sub-component of the first component is associated with or ionically or covalently bonded to at least one member of the calcium carbonate core; and at least one of the members of the second component is associated with or ionically or covalently bonded to at least one of the members of the sub-component of the first component.
3. The composition according to numbered paragraph 1 or 2, wherein the calcium carbonate core comprises precipitated calcium carbonate.
4. The composition according to any of numbered paragraphs 1 to 3, wherein the precipitated calcium carbonate has a BET specific surface area in the range of 2 to 100m2/g, preferably 5 to 50 m2/g, more preferably 10 to 30 m2/g.
5. The composition according to any of numbered paragraphs 1 to 4, wherein a precursor of the first component is selected from the group consisting of: hydroxyl functionalized polysilicates, polysilicic acid, sodium silicate, potassium silicate, an alkyl silicate, silica and combinations thereof.
6. The composition according to any of numbered paragraphs 1 to 5, wherein the second component is selected from the group consisting of: an aminosilane, vinylsilane, alkylsilane, aminoalkylsilane, phenylsilane, fluoroalkylsilane, and combinations thereof.
7. The composition according to any of numbered paragraphs 1 to 6, further comprising an aliphatic carboxylic acid layer positioned between the calcium carbonate core and the first component.
8. The composition according to numbered paragraph 7, wherein the aliphatic carboxylic acid comprises stearic acid.
9. The composition according to numbered paragraph 7, wherein:
   at least one of the members of the aliphatic carboxylic acid layer is associated with at least one of the members of the calcium carbonate core;
   at least one of the members of the sub-component of the first component is associated with or ionically or covalently bonded to one or more of i) at least one member of the aliphatic carboxylic acid layer, and ii) at least one of the members of the calcium carbonate core; and
   at least one of the members of the second component is associated with or ionically or covalently bonded to at least one of the members of the sub-component of the first component.
10. A method of making a treated composition, the method comprising:
   providing a calcium carbonate core;
   applying a first layer comprising a first component comprising silicon and at least one hydroxyl group to the surface of the calcium carbonate core thereby forming a first treated core, by contact of the CaCO₃ with a first material comprising an aqueous silicate; and
   contacting the first treated core with a second material comprising a compound selected from the group consisting of aminosilane, vinylsilane, alkylsilane, aminoalkylsilane, phenylsilane, fluoroalkylsilane, and combinations thereof to thereby apply a second layer on the surface of the first layer, wherein the second layer comprises a second component of a formula selected from:

      [(OR1)₃Si-(R2)]ₘ-X

      or

      [(OR1)₂(OH)Si-(R2)]ₘ-X

      or

      [(OR1)(OH)₂Si-(R2)]ₘ-X

      or

      [(OH)₃Si-(R2)]ₘ-X

      or

      [(Si-O)(OH)₂Si-(R2)]ₘ-X

      or

      [(Si-O)(OH)Si-(R2)]ₘ-X

      or

      [(Si-O)Si-(R2)]ₘ-X

      wherein R1, R2 are alkyl groups, and X is a functional group selected from the group consisting of: amino, vinyl, alkyl, aminoalkyl, phenyl, and fluoroalkyl and m can be 1 or 2; optionally, wherein the alkyl groups of R1 contains 1 or 2 carbon atoms per molecule; and the alkyl groups of R2 contain 3 carbon atoms per molecule.
11. The method according to numbered paragraph 10, wherein the calcium carbonate core comprises precipitated calcium carbonate.
12. The method according to any of numbered paragraphs 10 or 11, wherein the precipitated calcium carbonate has a BET in the range of 2 to 100m²/g, preferably 5 to 50 m²/g, more preferably 10 to 30 m²/g.
13. The method according to any of numbered paragraphs 10 to 12, wherein a precursor of the first component is selected from the group consisting of: hydroxyl functionalized polysilicates, polysilicic acid, sodium silicate, potassium silicate, an alkyl silicate, silica and combinations thereof.
14. The method according to any of numbered paragraphs 10 to 13, further comprising:
   applying an aliphatic carboxylic acid layer to the calcium carbonate core prior to application of the first layer.
15. The method according to numbered paragraph 14, wherein the aliphatic carboxylic acid comprises stearic acid.
16. A filled polymer composition, comprising:
   a polymer; and
   a filler comprising a treated composition according to any of the preceding numbered paragraphs.
17. The filled polymer composition according to numbered paragraph 16, wherein the polymer is selected from the group consisting of silane-terminated polyethers, silane-terminated polyurethane, silane modified polymers, and combinations thereof.
18. Use of a filler comprising a treated composition according to any of numbered paragraphs 1 to 15 as a filler in a filled polymer.
19. The use according to numbered paragraph 18, wherein the polymer is selected from the group consisting of silane-terminated polyethers, silane-terminated polyurethane, silane modified polymers, and combinations thereof.

### EXAMPLES

### Treated PCC Preparation

Four silane PCC samples (A - D) were produced as described below.

The following precipitated calcium carbonates (PCCs) were used in these examples:
For PCC-A - an untreated PCC (no aliphatic carboxylic acid) with a BET SSA of 18 - 22 m²/g, and a moisture content below 0.6%;
For PCC-B - same as A
For PCC-C - a PCC treated with 15-24 g/kg stearin and having a BET SSA of 18 - 22 m²/g, and a moisture content below 0.6%;
For PCC-D and COMP-2 - a PCC treated with 24 - 33 g/kg stearin and having a BET SSA of 18 - 22 m²/g, and a moisture content below 0.6%;
For COMP-1 - a PCC treated with 24 - 36 g/kg stearin and having a BET SSA of 10 - 16 m2/g, and a moisture content below 0.6%.

For the purposes of this disclosure, moisture content is determined by the following method.

### METHODS OF TESTING PCCs

### DETERMINATION OF THE LOSS ON DRYING

### HALOGEN MOISTURE ANALYZER METHOD

PRINCIPLE - The loss on drying of PCCs at a temperature of 105 °C is determined with a Halogen Moisture Analyzer. Concerning PCCs, at this temperature, loss on drying corresponds to water.

EQUIPMENT - Halogen desiccator coupled with a balance, precision 1 mg (Mettler HB43-S; hereinafter "Mettler HB")
- sample weight: around 10 g
- drying program: pass directly from ambient temperature to final temperature without defined gradient (Standard for Mettler HB)
- drying temperature: 105 °C
- switch-off criterion: the measure is finished when the weight decrease is lower than 1 mg in 90 s (Level 4 for Mettler HB)
- result: in moisture content percentage (% MC for Mettler HB)
- without corrective factor (Free factor = No for Mettler HB)

### PROCEDURE

- open the drier
- determine the tare weight (not useful in Auto mode for Mettler HB)
- place 10.0 ± 0.1 g of PCC in the (cleaned) sample pan and distribute it as homogenously as possible without packing down
- shut the drier - press on "Start" (not useful in Auto mode for Mettler HB)
- notice the result (in percentage) on the digital display

### RESULTS: given in g/kg with 1 decimal

Measurement precision
for usual PCC humidities (5 ± 2 g/kg) the precision is better than 0.5 g/kg.

For each of the Samples PCC-A - PCC-D, a 1500 g quantity of a respective PCC was either treated or not treated, as described below and in Table I.

The treatments 1 and 2 were each performed in a chamber of a Steele & Colishaw mixer employing high shear zones. The chamber was operated at ambient pressure and the mixing was for about 10 minutes for each of the 1^{st} and 2^{nd} treatments, as applicable.

### 1^{st} Treatment

Portions of the PCC Samples PCC-A - PCC-D were each contacted in the mixing chamber with an aqueous solution comprising an ethyl polysilicate (40wt% concentration) resulting in intermediate treated PCC.

### 2^{nd} Treatment

The intermediate treated PCC's were then contacted with an aminofunctional silane in liquid form in the same mixing chamber as used in the 1^{st} Treatment. The amounts of such coatings on the PCC Samples PCC-A - PCC-D are shown in Table 1 below. For PCC-A, a portion of such was not subjected to this 2^{nd} treatment step, and such sample is designated as PCC-A1 in Table 1.

**TABLE 1**

| Sample | 1^{st} Coating (ethyl polysilicate) wt%, based on total weight of the treated PCC | 2^{nd} Coating (aminofunctional silane) wt%, based on total weight of the treated PCC |
|---|---|---|
| PCC-A | 0.40 | 2.00 |
| PCC-B | 0.80 | 1.00 |
| PCC-C | 0.20 | 0.50 |
| PCC-D | 0.40 | 1.00 |
| COMP-1 | No treatment | No treatment |
| COMP-2 | No treatment | No treatment |
| PCC-A 1 | 0.40 | No treatment |

### Formulation Preparation

A quantity of 1300 g of a PCC filler selected from Sample PCC's PCC-A - PCC-D and comparative PCCs: PCC-A1 (treated only with ethyl polysilicate); COMP-1 (treated with aliphatic carboxylic acids, but not treated with silane); and COMP-2 (treated with aliphatic carboxylic acids, but not treated with silane) was added to 700g of MS-polymer. Other components included a plasticizer, titanium dioxide, a moisture scavenger, fumed silica, an adhesion promoter, a UV stabilizer, and a dioctyltin catalyst to form Formulations 1 - 7. The wt% of the PCC Samples used in the Formulations is shown in Table 3.

### Results of Mechanical Testing

The different formulations lead to the mechanical properties below in Table 3.

**TABLE 3**

| **Formulation** | **Description** | **Modulus 100% (MPa)** | **Strength at break (MPa)** | **Elongation at break (%)** |
|---|---|---|---|---|
| **1** | 100% COMP-1 PCC | 1.36 | 2.64 | 405 |
| **2** | 100% COMP-2 PCC | 1.42 | 2.76 | 395 |
| **3** | 100% Sample PCC-A | 3.24 | 4.20 | 163 |
| **4** | 100% Sample PCC-B | 2.97 | 3.60 | 150 |
| **5** | 100% Sample PCC-C | 1.86 | 3.20 | 293 |
| **6** | 100% Sample PCC-D | 1.55 | 2.90 | 303 |
| **7** | 100% Sample PCC-A1 | Measurement not possible* | Measurement not possible* | Measurement not possible* |

| | | | | |
|---|---|---|---|---|
| * The formulation made using this PCC-A1 Sample was extremely sticky, and it was not possible or workable to perform any mechanical testing on the resulting formulation. | | | | |

Comparative PCC samples COMP-1 and COMP-2 lead to the same or very similar mechanical properties.

Samples PCC-A & PCC-B, the silane treated PCC with the highest content of silane, leads to a high modulus and strength at break while the elongation at break is low.

Silane coating in accordance with the present disclosure leads to high strength and consequently low elongation, while stearin coating alone (as for comparative PCC's COMP-1and COMP-2) leads to lower strength and high elongation; and coating with ethyl polysilicate alone (Sample PCC-A1) resulted in an unworkable formulation.

When adding silane coating to an aliphatic carboxylic acid treated PCC, medium strength and medium elongation is reached, as for Samples PCC-C & PCC-D.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A composition comprising:
a calcium carbonate core at least partially surface treated with a compound comprising a first component containing a sub-component of the formula (Si-O)ₙ, wherein n is at least 1; and up to 100 or up to 10 or up to 7 or up to 5 ; and a second component of a formula selected from:
[(OR1)₃Si-(R2)]ₘ-X
or
[(OR1)₂(OH)Si-(R2)]ₘ-X
or
[(OR1)(OH)₂Si-(R2)]ₘ-X
or
[(OH)₃Si-(R2)]ₘ-X
or
[(Si-O)(OH)₂Si-(R2)-X]ₘ
or
[(Si-O)(OH)Si-(R2)-X]ₘ
or
[(Si-O)Si-(R2)]ₘ-X
wherein R1, R2 are alkyl groups, and X is a functional group selected from the group consisting of: amino, vinyl, alkyl, aminoalkyl, phenyl, and fluoroalkyl and m can be 1 or 2; optionally, wherein the alkyl groups of R1 contains 1 or 2 carbon atoms per molecule; and the alkyl groups of R2 contain 3 carbon atoms per molecule.

2. The composition of claim 1 wherein: at least one of the members of the sub-component of the first component is associated with or ionically or covalently bonded to at least one member of the calcium carbonate core; and
at least one of the members of the second component is associated with or ionically or covalently bonded to at least one of the members of the sub-component of the first component.

3. The composition in accordance with claim 1, wherein the calcium carbonate core comprises precipitated calcium carbonate.

4. The composition in accordance with claim 3, wherein the precipitated calcium carbonate has a BET specific surface area in the range of 2 to 100 m²/g, preferably 5 to 50 m²/g, more preferably 10 to 30 m²/g.

5. The composition in accordance with claim 1, wherein a precursor used in forming the first component is selected from the group consisting of: hydroxyl functionalized polysilicates, polysilicic acid, sodium silicate, potassium silicate, an alkyl silicate, silica and combinations thereof.

6. The composition in accordance with claim 1, wherein the second component is selected from the group consisting of: an aminosilane, vinylsilane, alkylsilane, aminoalkylsilane, phenylsilane, fluoroalkylsilane, and combinations thereof.

7. The composition in accordance with claim 1, further comprising an aliphatic carboxylic acid layer positioned between the calcium carbonate core and the first component.

8. The composition in accordance with claim 7, wherein the aliphatic carboxylic acid comprises stearic acid.

9. The composition of claim 7 wherein:
at least one of the members of the aliphatic carboxylic acid layer is associated with at least one of the members of the calcium carbonate core;
at least one of the members of the sub-component of the first component is associated with or ionically or covalently bonded to one or more of i) at least one member of the aliphatic carboxylic acid layer, and ii) at least one of the members of the calcium carbonate core; and
at least one of the members of the second component is associated with or ionically or covalently bonded to at least one of the members of the sub-component of the first component.

10. A method of making a treated composition, the method comprising:
providing a calcium carbonate core, optionally wherein the calcium carbonate core comprises precipitated calcium carbonate;
applying a first layer comprising a first component comprising silicon and at least one hydroxyl group to the surface of the calcium carbonate core thereby forming a first treated core, by contact of the CaCO₃ with a first material comprising an aqueous silicate; and
contacting the first treated core with a second material comprising a compound selected from the group consisting of aminosilane, vinylsilane, alkylsilane, aminoalkylsilane, phenylsilane, fluoroalkylsilane, and combinations thereof to thereby apply a second layer on the surface of the first layer, wherein the second layer comprises a second component of a formula selected from:
[(OR1)₃Si-(R2)]ₘ-X
or
[(OR1)₂(OH)Si-(R2)]ₘ-X
or
[(OR1)(OH)₂Si-(R2)]ₘ-X
or
[(OH)₃Si-(R2)]ₘ-X
or
[(Si-O)(OH)₂Si-(R2)]ₘ-X
or
[(Si-O)(OH)Si-(R2)]ₘ-X
or
[(Si-O)Si-(R2)]ₘ-X
wherein R1, R2 are alkyl groups, and X is a functional group selected from the group consisting of: amino, vinyl, alkyl, aminoalkyl, phenyl, and fluoroalkyl, and m can be 1 or 2; optionally, wherein the alkyl groups of R1 contains 1 or 2 carbon atoms per molecule; and the alkyl groups of R2 contain 3 carbon atoms per molecule.

11. The method in accordance with claim 10, wherein the calcium carbonate core comprises precipitated calcium carbonate having a BET in the range of 2 to 100m²/g, preferably 5 to 50 m²/g, more preferably 10 to 30 m²/g.

12. The method in accordance with claim 10, wherein the precursor of a first component is selected from the group consisting of: hydroxyl functionalized polysilicates, polysilicic acid, sodium silicate, potassium silicate, an alkyl silicate, silica and combinations thereof.

13. The method in accordance with claim 10, further comprising:
applying an aliphatic carboxylic acid layer to the calcium carbonate core prior to application of the first layer; optionally wherein the aliphatic carboxylic acid comprises stearic acid.

14. A filled polymer composition comprising:
a polymer; and
a filler comprising a treated composition in accordance with claims 1-9; optionally, wherein: the polymer is selected from the group consisting of silane-terminated polyethers, silane-terminated polyurethane, silane modified polymers, and
combinations thereof.

15. Use of a filler comprising a treated composition according to any of the preceding claims as a filler in a filled polymer, optionally, wherein:
the polymer is selected from the group consisting of silane-terminated polyethers, silane-terminated polyurethane, silane modified polymers, and combinations thereof.
